# EUROPÄISCHE PATENTSCHRIFT

(11) **EP 3 643 410 B1**
(45) Veröffentlichungstag und Bekanntmachung des Hinweises auf die Patenterteilung: **02.06.2021**
(21) Anmeldenummer: 19401039.3
(22) Anmeldetag: 30.09.2019
(51) Int. Cl.: B05B 15/40, A01M 7/00, B05B 15/658, B05B 1/16, B05B 1/30

(54) **DÜSENKÖRPER FÜR EINE LANDWIRTSCHAFTLICHE PFLANZENSCHUTZSPRITZE**
NOZZLE BODY FOR AN AGRICULTURAL CROP PROTECTION SPRAYER
CORPS DE BUSE POUR UN PULVÉRISATEUR AGRICOLE

(30) Priorität: 25.10.2018 DE 102018126578; 25.10.2018 DE 102018126580
(43) Veröffentlichungstag der Anmeldung: 29.04.2020
(73) Patentinhaber: Amazonen-Werke H. Dreyer SE & Co. KG, 49205 Hasbergen (DE)
(72) Erfinder: Austermann, Stefan, 48291 Telgte (DE); Rahe, Florian, 49504 Lotte (DE); Dembeck, Achim, 49134 Wallenhorst (DE); Hilbert, Florenz, 48282 Emsdetten (DE); Trentmann, Markus, 49134 Wallenhorst (DE)

(56) Entgegenhaltungen:
- EP-A1- 3 533 523
- US-B2- 8 888 015

## Beschreibung

Die Erfindung betrifft einen Düsenkörper für eine landwirtschaftliche Pflanzenschutzspritze gemäß dem Oberbegriff des Patentanspruches 1.

Derartige Düsenkörper sind für landwirtschaftliche Pflanzenschutzspritzen in der Praxis bekannt geworden.

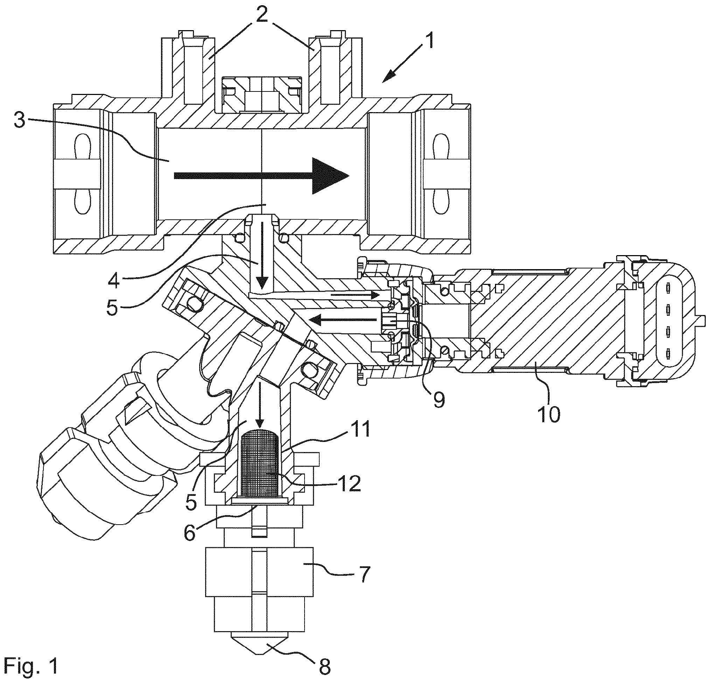

Solche Düsenkörper, wie in Fig.1 dargestellt, weisen ein Gehäuse mit zumindest einer Zuleitung auf. Von der Zuleitung zweigt zumindest eine zu zumindest einem an dem Gehäuse des Düsenkörpers angeordnete Düse abzweigende Ausbringleitung ab. In der Ausbringleitung ist zumindest ein Filter- und/oder Siebelement und zumindest ein Dosier- und/oder Absperrventil mit elektromotorischem Betätigungselement, vorzugsweise ein Pulsweitenmodulationsventil angeordnet. Das Filter- und/oder Siebelement ist zwischen dem von einem elektromotorischen Betätigungselement betätigten Dosier- und/oder Absperrventil, welche beispielsweise als Pulsweitenmodulationsventil ausgebildet sind, und der die auszubringenden Flüssigkeiten zerstäubenden Düse angeordnet.

Hierdurch gelangen in der auszubringenden Flüssigkeit enthaltenen Verunreinigungen direkt zu dem vor dem Filter- und/oder Siebelement angeordneten Dosier- und/oder Absperrventil. Diese in der auszubringenden Flüssigkeit enthaltenen Verunreinigungen verstopfen dann das jeweilige Filter- und/oder Siebelement. Darüber hinaus können die jeweiligen Filter- und/oder Siebelemente bei geschlossenen Dosier- und/oder Absperrventil nicht gespült oder umspült werden, so dass die Filter- und/oder Siebelemente in diesem Falle nicht gereinigt werden können oder die in der auszubringenden Flüssigkeit enthaltene Verunreinigungen und/oder Wirkstoffe aus der Trägerflüssigkeit der auszubringenden Flüssigkeit ausflocken und es so anschließend zu einer größeren Verstopfungsgefahr kommt. Dies beruht auch darauf, dass durch die bekannte Anordnung ein sehr großes Volumen bei abgesperrten Dosier- und/oder Absperrventil nicht in Bewegung gehalten wird, so dass es zwangsläufig zu den vorgenannten Problemen kommt. Außerdem baut der Düsenkörper im Bereich der Düse durch die Anordnung des Filter- und/oder Siebelementes zwischen dem Dosier- und/oder Absperrventil und der Düse sehr lang.

Weiterhin ist bei der bekannten Anordnung nach Fig.1 oder wie in der EP 3 533 523 A1 veröffentlicht, bei welcher die Ausbringleitung in dem unteren Bereich der Zuleitung in Richtung des jeweiligen Dosier- und/oder Absperrventils vor dem jeweiligen Filter- und/oder Siebelement nach unten abzweigt, nachteilig, dass in diesem aufrecht verlaufenden Bereich der Ausbringleitung bei längerer Absperrung der Ausbringleitung durch das jeweilige Dosier- und/oder Absperrventil sich Auswirkungen in der auszubringenden Flüssigkeit bilden, so dass sowohl das jeweilige Filter- und/oder Siebelement wie auch die zugeordnete Ausbringdüse sehr schnell verstopfen und es so Arbeitsausfällen kommt. Auch ist die einwandfreie Funktion des jeweiligen Dosier- und/oder Absperrventils nicht gewährleistet.

Der Erfindung liegt die Aufgabe zu Grunde, in einfacher Weise bei einer kompakteren Bauweise des Düsenkörpers die Verstopfungsgefahr des Düsenkörpers, insbesondere im Bereich des jeweiligen Dosier- und/oder Absperrventils durch das jeweilige Filter- und/oder Siebelement zu vermeiden bzw. erheblich zu verringern.

Diese Aufgabe wird erfindungsgemäß durch die kennzeichnenden Merkmale des Anspruches 1 gelöst.

Infolge dieser Maßnahme wird durch die erfindungsgemäße Anordnung des jeweiligen Filter- und/oder Siebelementes einerseits erreicht, dass zumindest die gröberen Partikel von Verunreinigungen in der auszubringenden Flüssigkeit vor dem jeweiligen Filter- und/oder Siebelement aufgehalten werden, so dass sie nicht zu dem jeweiligen Dosier- und/oder Absperrelement gelangen. Somit wird eine Fehlfunktion des jeweiligen Dosier- und/oder Absperrelementes sicher verhindert. Außerdem wird durch diese Anordnung erreicht, dass bei geschlossenem Dosier- und/oder Absperrelement das jeweilige Dosier- und/oder Absperrelement permanent umspült wird, so dass eine Verstopfung vermieden werden kann. Außerdem wird durch diese integrierte Anordnung des jeweiligen Filter- und/oder Siebelementes vor dem jeweiligen Dosier- und/oder Absperrelement eine kompakte Bauweise des Düsenkörpers erreicht. Hierdurch lässt sich die Düse, welche die auszubringende Flüssigkeit zerstäubt, unmittelbar hinter dem jeweiligen Dosier- und/oder Absperrelement zur Erreichung der kompakten Bauweise mit einer reduzierten Länge des Düsenanschlussstutzens anordnen.

Eine besonders gute Durchspülung und/oder Umspülung des Filter- und/oder Siebelementes ist dadurch erreicht, dass das zumindest eine Filter- und/oder Siebelement zumindest teilweise in den durch die Zuleitung fließenden Flüssigkeitsstrom hineinragend in der Zuleitung angeordnet ist.

In einer Weiterbildung der Erfindung ist vorgesehen, dass das zumindest eine Filter- und/oder Siebelement in Strömungsrichtung der auszubringenden Flüssigkeit gesehen vor dem Dosier- und/oder Absperrelement in der Ausbringleitung angeordnet ist. Hierdurch wird sichergestellt, dass bei einer integrierten Anordnung des Filter- und/oder Siebelementes dieses bei abgesperrten Dosier- und/oder Absperrelement ausreichend umspült bzw. durchspült wird.

Eine besonders für die Durchspülung vorteilhafte Anordnung für das Filter- und/oder Siebelement ergibt sich dadurch, dass das zumindest eine Filter- und/oder Siebelement in Strömungsrichtung der auszubringenden Flüssigkeit gesehen vor dem Dosier- und/oder Absperrelement im Abzweigbereich der Ausbringleitung von der Zuleitung angeordnet ist.

In einer bevorzugten Ausgestaltung ist vorgesehen, dass das zumindest eine Filter- und/oder Siebelement in Strömungsrichtung der auszubringenden Flüssigkeit gesehen vor dem Dosier- und/oder Absperrelement in der Zuleitung unmittelbar vor und/oder im Abzweigbereich der Ausbringleitung von der Zuleitung angeordnet ist.

Die besonders gute Durchspülung und/oder Umspülung des Filter- und/oder Siebelementes lässt sich dadurch sicherstellen, dass das zumindest eine Filter- und/oder Siebelement zumindest teilweise in den durch die Zuleitung fließenden Flüssigkeitsstrom sich befindend in der Zuleitung angeordnet ist.

Hierbei hat sich für die vorbeschriebene Wirkungsweise besonders vorteilhaft herausgestellt, dass die Ausbringleitung im oberen Bereich der Zuleitung zunächst nach oben gerichtet von der Zuleitung abzweigt.

Eine vorteilhafte Führung der Ausbringleitung von der Zuleitung zu der Ausbringdüse mit den vorbeschriebenen Vorteilen wird dadurch erreicht, dass die Ausbringleitung von der Abzweigung von der Zuleitung U-förmig bis zu dem Dosier- und/oder Absperrelement in der Ausbringleitung verlaufend ausgebildet ist.

Eine vorteilhafte Anordnung für das das Dosier- und/oder Absperrelement ergibt sich dadurch, dass das Dosier- und/oder Absperrelement in einem zumindest annähernd senkrecht verlaufenden Bereich der Ausbringleitung vor der Düse angeordnet ist.

Weitere Einzelheiten der Erfindung sind der Beispielsbeschreibung und den Zeichnungen zu entnehmen. Die Zeichnungen zeigen
Fig.1 einen Düsenkörper nach dem Stand der Technik im Längsschnitt,
Fig.2 einen erfindungsgemäßen Düsenkörper in perspektivischer Darstellung,
Fig.3 den erfindungsgemäßen Düsenkörper nach Fig.2 in Seitenansicht,
Fig.4 den erfindungsgemäßen Düsenkörper nach Fig.2 im Schnitt IV - IV,
Fig.5 den erfindungsgemäßen Düsenkörper nach Fig.2 im Längsschnitt V - V,
Fig.6 den erfindungsgemäßen Düsenkörper nach Fig.2 im Querschnitt VI - VI,
Fig.7 den erfindungsgemäßen Düsenkörper nach Fig.2 im Schnitt VII - VII und
Fig.8 den erfindungsgemäßen Düsenkörper nach Fig.2 im Schnitt VIII - VIII.

Der als Mehrfachdüsenkörper entsprechend des Standes der Technik ausgebildete Düsenkörper gemäß Fig.1 ist zur Anordnung an dem Verteilergestänge einer landwirtschaftlichen Pflanzenschutzspritze vorgesehen und weist ein Gehäuse 1 auf. An dem Gehäuse 1 ist die Befestigungsmittel 2 angeordnet, mit welchem der Mehrfachdüsenkörper an Rahmenelementen, Verteilergestänge, etc. befestigt werden kann. Im oberen Bereich des Gehäuses 1 des Mehrfachdüsenkörpers befindet sich ein Teilstück 3 der Flüssigkeitsleitung, welches Bestandteil des Gehäuses 1 ist. Dieses Teilstück 3 wird an die beispielsweise im Verteilergestänge verlegte als Zuleitung ausgebildete Flüssigkeitsleitung, an die einzelnen Mehrfachdüsenkörper, die beabstandet zueinander an dem Verteilergestänge angeordnet sind, angeschlossen sind. Somit bildet in diesem Falle das Teilstück 3 ein Teil der Flüssigkeitsleitung. Über diese Flüssigkeitsleitung 3 wird jeden Mehrfachdüsenkörper die auszubringende Flüssigkeit zugeführt.

Von dem Teilstück 3 der Flüssigkeitsleitung zweigt im Abzweigbereich 4 die Ausbringleitung 5 ab. An dem Ende 6 der Ausbringleitung 5 ist mittels eines Kuppelstückes 7 die Ausbringdüse 8 angeordnet. In der Ausbringleitung 5 ist ein Dosier- und/oder Absperrventil 9 mit elektromotorischem Betätigungselement 10, vorzugsweise ein Pulsweitenmodulationsventil angeordnet. Weiterhin ist in der Ausbringleitung 5 in dem Bereich 11 zwischen dem Absperrventil 9 und der Ausbringdüse 8 ein Filter- und/oder Siebelement 12 angeordnet. Mittels des Filter- und/oder Siebelementes 12 werden Verunreinigungen in der auszubringenden Flüssigkeit, die durch die Ausbringdüse 8 zerstäubt wird, von der Ausbringdüse ferngehalten, so dass diese nicht verstopft. Mittels des Dosier- und/oder Absperrventils 9 mit elektromotorischem Betätigungselement 10 lässt sich die Zufuhr der auszubringenden Flüssigkeit zu der Ausbringdüse 8 absperren, oder wenn das Ventil 9 mit dem elektromotorischem Betätigungselement 10 als Pulsweitenmodulationsventil ausgebildet ist, auch zusätzlich in der tatsächlich ausgebrachten Menge an auszubringender Flüssigkeit in bekannter Weise regulieren. Wie in der Fig.1 erkennbar ist, ist die Ausbringdüse 8 aufgrund der Anordnung des Filter- und/oder Siebelementes 12 in dem Bereich 11 zwischen dem Absperrventil 9 und der Ausbringdüse 8 in einem größeren Abstand von dem Ventil 9 entfernt angeordnet, so dass der bekannte Mehrfachdüsenkörper eine relativ große Länge von dem Teilstück 3 der als Zuleitung ausgebildete Flüssigkeitsleitung bis zu dem unteren Ende der Ausbringdüse 8 aufweist.

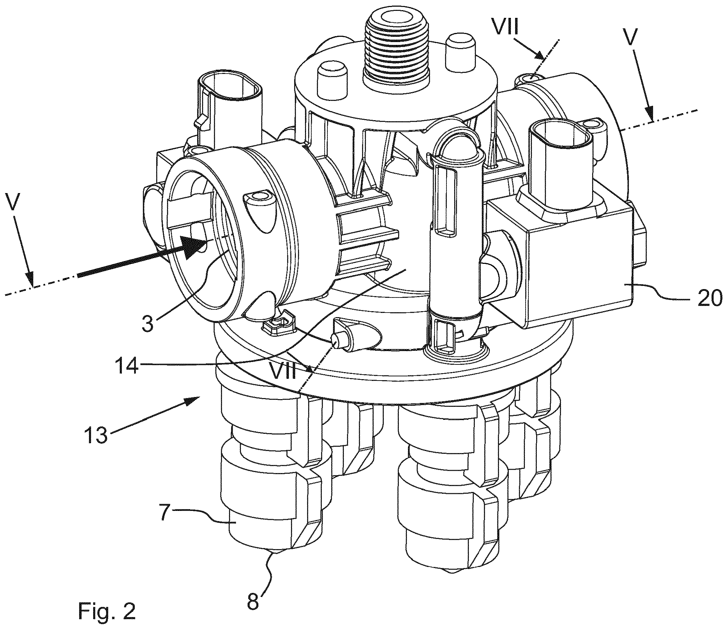

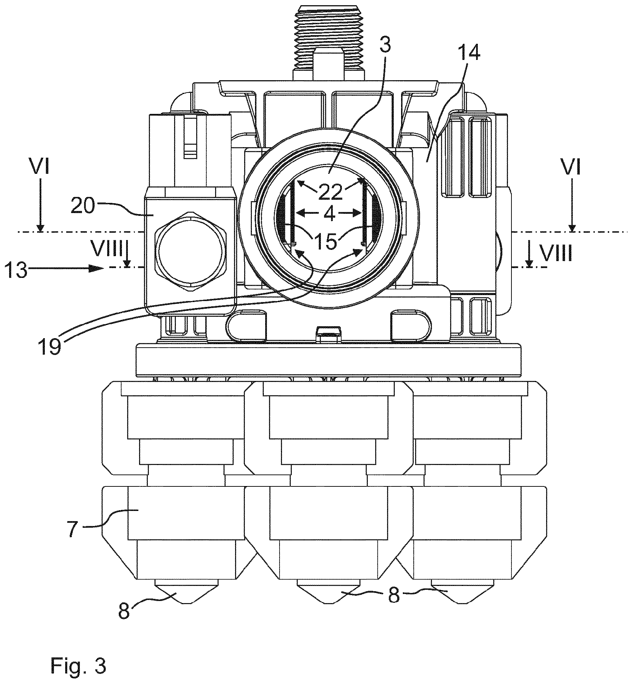

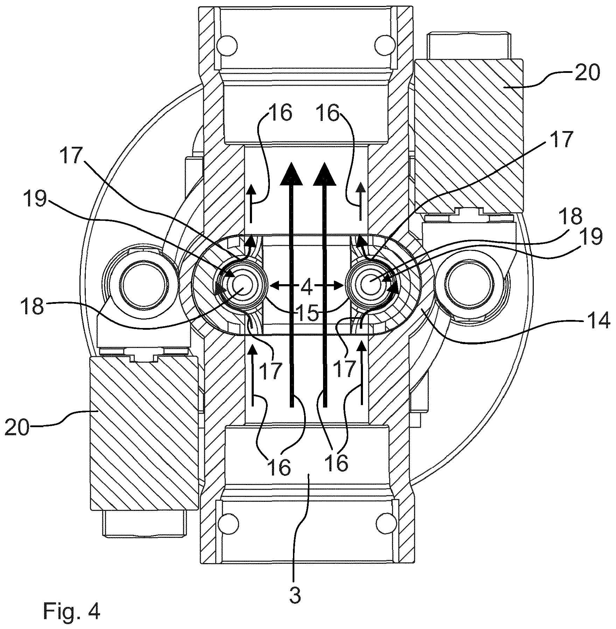

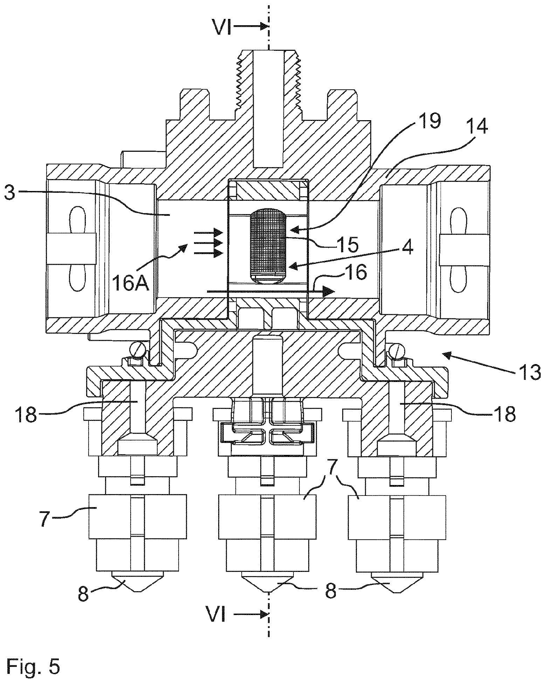

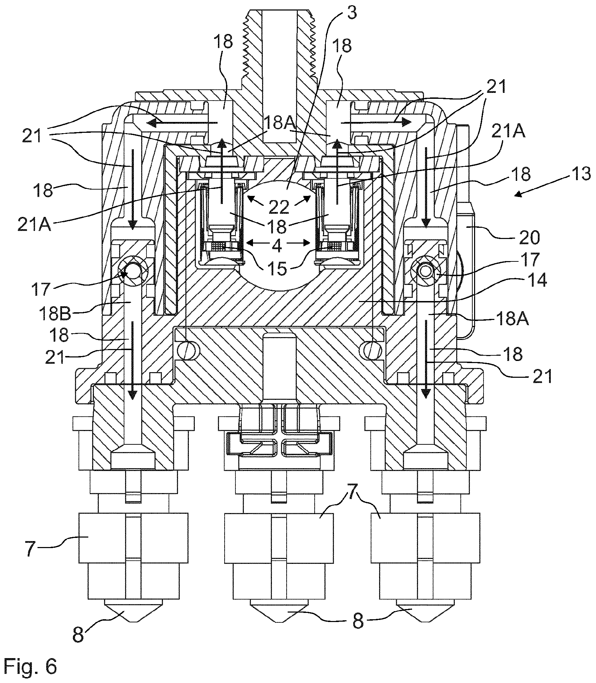

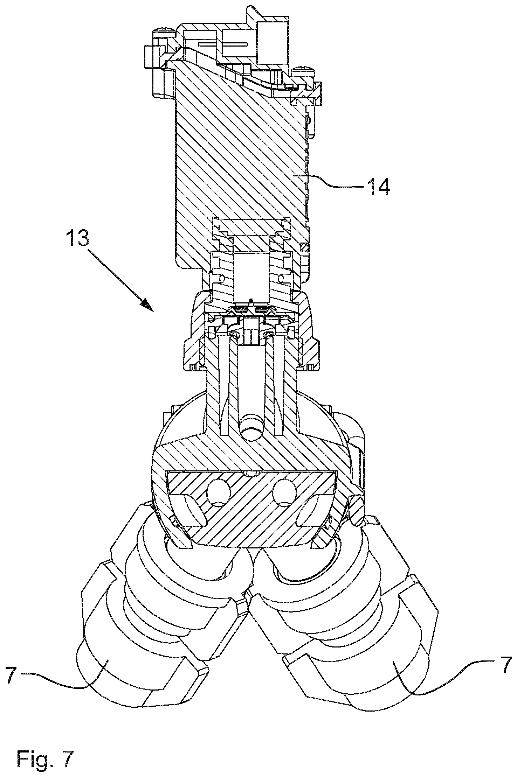

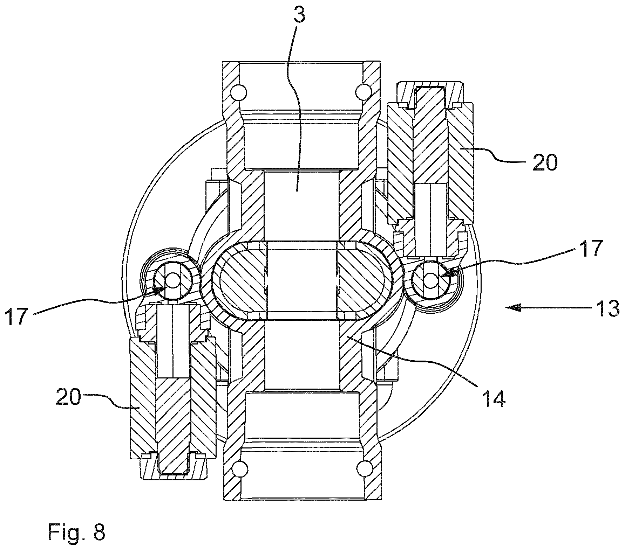

Der als Mehrfachdüsenkörper nach der Erfindung ausgebildete Düsenkörper 13 gemäß den Fig.2 bis 8 ist ebenfalls zur Anordnung an dem Verteilergestänge einer landwirtschaftlichen Pflanzenschutzspritze vorgesehen und weist ein Gehäuse 14 auf. Dieser erfindungsgemäße Mehrfachdüsenkörper 13 unterscheidet sich durch eine wesentlich kompaktere Bauweise von dem Mehrfachdüsenkörper 13 nach Fig.1, dies wird vor allem durch die Zuordnung des zumindest einen Filter- und/oder Siebelementes 15 in Strömungsrichtung 16 der auszubringenden Flüssigkeit gesehen vor dem Dosier- und/oder Absperrelement 17 in der Ausbringleitung 18.

Bei dem erfindungsgemäßen Düsenkörper nach den Fig.2 bis 8 zweigen von der Zuleitung 3 zwei Ausbringleitungen 18 ab. In dem Abzweigbereich 19 der jeweiligen Ausbringleitung 18 von der Zuleitung 3 ist jeweils zumindest ein Filter- und/oder Siebelement 15 angeordnet. Weiterhin ist in jeder Ausbringleitung 18 zumindest ein Dosier- und/oder Absperrventil 17 mit elektromotorischem 20, vorzugsweise ein Pulsweitenmodulationsventil angeordnet.

Das zumindest eine Filter- und/oder Siebelement 15 ist in Strömungsrichtung 21 der auszubringenden Flüssigkeit gesehen vor dem Dosier- und/oder Absperrelement 17 in der Ausbringleitung 18 angeordnet. Durch die vorbeschriebene Anordnung ist das jeweils zumindest eine Filter- und/oder Siebelement 15 in Strömungsrichtung 21 der auszubringenden Flüssigkeit gesehen vor dem Dosier- und/oder Absperrelement 17 im Abzweigbereich 4 der Ausbringleitung 18 von der Zuleitung 3. Hierbei ist das zumindest eine Filter- und/oder Siebelement 15 in Strömungsrichtung 21 der auszubringenden Flüssigkeit gesehen vor dem Dosier- und/oder Absperrelement 17 in der Zuleitung 3 unmittelbar vor und/oder im Abzweigbereich 4 der Ausbringleitung 18 von der Zuleitung 3 angeordnet.

Die Anordnung des jeweiligen Filter- und/oder Siebelementes 15 ist so vorgenommen, dass es zumindest teilweise in den durch die Zuleitung 3 fließenden Flüssigkeitsstrom 16 A hineinragend in der Zuleitung 3 angeordnet ist. Somit befindet sich das Filter- und/oder Siebelement 15 zumindest teilweise in den durch die Zuleitung 3 fließenden Flüssigkeitsstrom 16 A in der Zuleitung 3 angeordnet. Um dieses sicher zu erreichen ist das zumindest eine Filter- und/oder Siebelement 15 in Strömungsrichtung 16 bzw. 16 A der auszubringenden Flüssigkeit gesehen vor dem Dosier- und/oder Absperrelement 17 zumindest teilweise in der Zuleitung 3 angeordnet. Hierbei zweigt die Ausbringleitung 18 im oberen Bereich 22 der Zuleitung 3 von der Zuleitung 3 ab.

Der abzweigende Bereich 18 A der Ausbringleitung 18 ist im oberen Bereich 22 der Zuleitung 3 zunächst nach oben von der Zuleitung 3 abzweigend ausgerichtet. Die Ausbringleitung 18 ist von der Abzweigung von der Zuleitung 3 U-förmig bis zu dem Dosier- und/oder Absperrelement 17 in der Ausbringleitung 18 verlaufend ausgebildet. Das Dosier- und/oder Absperrelement 17 ist in dem zumindest annähernd senkrecht verlaufenden Bereich 18 B der Ausbringleitung 18 vor der Düse 8 angeordnet ist.

Wie aus den Zeichnungen gemäß den Fig.2 bis 8 ersichtlich ist, können die Ausbringdüsen 8 gegenüber dem bekannten Mehrfachdüsenkörper gemäß Fig.1 wesentlich dichter zu der Zuleitung 3 angeordnet werden, so dass sich eine wesentlich kompaktere Ausgestaltung des Mehrfachdüsenkörpers realisieren lässt.

Die Funktionsweise ist folgende:
Die in der Zuleitung 3 strömende auszubringende Flüssigkeit zweigt zumindest teilweise in dem oberen Bereich 22 der Zuleitung in einem Teilstrom 21 A in dem abzweigenden Bereich 18 A der Ausbringleitung 18 durch das Filter- und/oder Siebelement 15 ab. Dieser Teilstrom 21 A strömt dann weiter durch die Ausbringleitung 18 zu dem von dem elektromotorischen Betätigungselement 10 betätigten Dosier- und/oder Absperrelement 17, welches somit als Pulsweitenmodulationsventil ausgebildet ist. Durch dieses Pulsweitenmodulationsventil wird in bekannter Weise die Ausbringmenge der auszubringenden Flüssigkeit über die diese 8 bestimmt.

Durch die in die Flüssigkeitsströmung 16 und 16 A in der Zuleitung 3 hineinragende Anordnung der Filter- und/oder Siebelemente 15 liegen diese Filter- und/oder Siebelement 15 zumindest teilweise in den Flüssigkeitsstrom der Zuleitung 3. Hierdurch ist die vorbeschriebene Reinigung der Filter- und/oder Siebelemente 15 und Vermeidung von Ablagerungen in und/oder an den Filter- und/oder Siebelemente 15 sichergestellt. Hierdurch wird die Verstopfungsgefahr von dem elektromotorischen Betätigungselement 10 betätigten Dosier- und/oder Absperrelement 17 erheblich reduziert, so dass insbesondere bei der Ausgestaltung als Pulsweitenmodulationsventile eine einwandfreie Funktion des Ventils gewährleistet ist.

Durch die vorbeschriebene Anordnung und Ausrichtung der Ausbringleitung 18 in U-Form wird sichergestellt, dass diese von den Filter- und/oder Siebelementen 15 ausgehend bis zu dem Pulsweitenmodulationsventil 17 nur eine geringe Länge aufweisen. Hierdurch kann nur ein geringes Flüssigkeitsvolumen bei Abschaltung stehen bleiben, so dass die Ausflockungsgefahr der auszubringenden Flüssigkeit in diesem Bereich deutlich reduziert ist.

## Patentansprüche

1. Düsenkörper (13) für eine landwirtschaftliche Pflanzenschutzspritze, wobei der Düsenkörper ein Gehäuse (14) mit zumindest einer Zuleitung (3) aufweist, wobei von der Zuleitung (3) zumindest eine zu zumindest einer an dem Gehäuse (14) des Düsenkörpers (13) angeordneten Düse (8) abzweigende Ausbringleitung (18) abzweigt, wobei in der Ausbringleitung (18) zumindest ein Filter- und/oder Siebelement (15) und zumindest ein Dosier- und/oder Absperrventil (17) mit elektromotorischem Betätigungselement (20), vorzugsweise ein Pulsweitenmodulationsventil angeordnet ist, wobei das zumindest eine Filter- und/oder Siebelement (15) in Strömungsrichtung (16, 16A) der auszubringenden Flüssigkeit gesehen vor dem Dosier- und/oder Absperrelement (17) der Ausbringleitung (18) zugeordnet ist, **dadurch gekennzeichnet, dass** das zumindest eine Filter- und/oder Siebelement (15) zumindest teilweise in den durch die Zuleitung (3) fließenden Flüssigkeitsstrom (16, 16A) hineinragend in der Zuleitung (3) angeordnet ist.

2. Düsenkörper nach Anspruch 1, **dadurch gekennzeichnet, dass** das zumindest eine Filter- und/oder Siebelement (17) in Strömungsrichtung (16, 16A) der auszubringenden Flüssigkeit gesehen vor dem Dosier- und/oder Absperrelement (17) im Abzweigbereich (19) der Ausbringleitung (18) von der Zuleitung (3) angeordnet ist.

3. Düsenkörper nach Anspruch 1, **dadurch gekennzeichnet, dass** das zumindest eine Filter- und/oder Siebelement (15) in Strömungsrichtung (16, 16A) der auszubringenden Flüssigkeit gesehen vor dem Dosier- und/oder Absperrelement (17) in der Zuleitung (3) unmittelbar vor und/oder im Abzweigbereich (19) der Ausbringleitung (18) von der Zuleitung (3) angeordnet ist.

4. Düsenkörper nach zumindest einem der vorstehenden Ansprüche, **dadurch gekennzeichnet, dass** das zumindest eine Filter- und/oder Siebelement (15) zumindest teilweise in den durch die Zuleitung (3) fließenden Flüssigkeitsstrom (16, 16A) sich befindend in der Zuleitung (3) angeordnet ist.

5. Düsenkörper nach zumindest einem der vorstehenden Ansprüche, **dadurch gekennzeichnet, dass** die Ausbringleitung (18) im oberen Bereich (22) der Zuleitung (3) von der Zuleitung (3) abzweigt.

6. Düsenkörper nach zumindest einem der vorstehenden Ansprüche, **dadurch gekennzeichnet, dass** die Ausbringleitung (18) im oberen Bereich (22) der Zuleitung (3) zunächst nach oben gerichtet von der Zuleitung (3) abzweigt.

7. Düsenkörper nach zumindest einem der vorstehenden Ansprüche, **dadurch gekennzeichnet, dass** die Ausbringleitung (18) von der Abzweigung von der Zuleitung (3) U-förmig bis zu dem Dosier- und/oder Absperrelement (17) in der Ausbringleitung (18) verlaufend ausgebildet ist

8. Düsenkörper nach zumindest einem der vorstehenden Ansprüche, **dadurch gekennzeichnet, dass** das Dosier- und/oder Absperrelement (17) in einem zumindest annähernd senkrecht verlaufenden Bereich (18B) der Ausbringleitung (18) vor der Düse (8) angeordnet ist.

## Claims

1. Nozzle body (13) for an agricultural crop protection sprayer, wherein the nozzle body has a housing (14) with at least one feed line (3), wherein at least one dispensing line (18) that branches off to at least one nozzle (8) arranged on the housing (14) of the nozzle body (13) branches off from the feed line (3), wherein at least one filter and/or screen element (15) and at least one metering and/or shut-off valve (17) with an electromotive actuating element (20), preferably a pulse width modulation valve, is arranged in the dispensing line (18), wherein the at least one filter and/or screen element (15), as seen in the direction of flow (16, 16A) of the liquid to be dispensed, is assigned upstream of the metering and/or shut-off element (17) of the dispensing line (18), **characterized in that** the at least one filter and/or screen element (15) is arranged in the feed line (3) in a manner projecting at least partially into the liquid stream (16, 16A) flowing through the feed line (3).

2. Nozzle body according to Claim 1, **characterized in that** the at least one filter and/or screen element (17), as seen in the direction of flow (16, 16A) of the liquid to be dispensed, is arranged upstream of the metering and/or shut-off element (17) in the region (19) in which the dispensing line (18) branches off from the feed line (3).

3. Nozzle body according to Claim 1, **characterized in that** the at least one filter and/or screen element (15), as seen in the direction of flow (16, 16A) of the liquid to be dispensed, is arranged upstream of the metering and/or shut-off element (17) in the feed line (3) immediately upstream of and/or in the region (19) in which the dispensing line (18) branches off from the feed line (3).

4. Nozzle body according to at least one of the preceding claims, **characterized in that** the at least one filter and/or screen element (15) is arranged at least partially in the liquid stream (16, 16A) that flows through the feed line (3) and is located in the feed line (3).

5. Nozzle body according to at least one of the preceding claims, **characterized in that** the dispensing line (18) branches off from the feed line (3) in the upper region (22) of the feed line (3).

6. Nozzle body according to at least one of the preceding claims, **characterized in that** the dispensing line (18) branches off from the feed line (3) initially in an upwardly directed manner in the upper region (22) of the feed line (3).

7. Nozzle body according to at least one of the preceding claims, **characterized in that** the dispensing line (18) is formed in a manner extending in a U-shaped manner from the point at which it branches off from the feed line (3) as far as the metering and/or shut-off element (17) in the dispensing line (18).

8. Nozzle body according to at least one of the preceding claims, **characterized in that** the metering and/or shut-off element (17) is arranged upstream of the nozzle (8) in a region (18B) of the dispensing line (18) that extends at least approximately vertically.

## Revendications

1. Corps de buse (13) destiné à un pulvérisateur de protection de cultures agricoles, le corps de buse comportant un boîtier (14) pourvu d'au moins une conduite d'alimentation (3), au moins une conduite de refoulement (18) dérivant de la conduite d'alimentation (3) en direction d'au moins une buse (8) disposée au niveau du boîtier (14) du corps de buse (13), au moins un élément de filtration et/ou de tamisage (15) et au moins une vanne de dosage et/ou d'arrêt (17) pourvue d'un élément d'actionnement électromoteur (20), de préférence une vanne à modulation de largeur d'impulsion, étant disposés dans la conduite de refoulement (18), l'au moins un élément de filtration et/ou de tamisage (15) étant associé en amont de l'élément de dosage et/ou d'arrêt (17) de la conduite d'évacuation (18) par référence au sens d'écoulement (16, 16A) du liquide à refouler, **caractérisé en ce que** l'au moins un élément de filtration et/ou de tamisage (15) est disposé dans la conduite d'alimentation (3) de manière à faire saillie au moins partiellement dans le flux de liquide (16, 16A) s'écoulant à travers la conduite d'alimentation (3).

2. Corps de buse selon la revendication 1, **caractérisé en ce que** l'au moins un élément de filtration et/ou de tamisage (17) est disposé dans la zone de dérivation (19) de la conduite de refoulement (18) depuis la conduite d'alimentation (3) en amont de l'élément de dosage et/ou d'arrêt (17) par référence au sens d'écoulement (16, 16A) du liquide à refouler.

3. Corps de buse selon la revendication 1, **caractérisé en ce que** l'au moins un élément de filtration et/ou de tamisage (15) est disposé directement avant et/ou dans la zone de dérivation (19) de la conduite de refoulement (18) depuis la conduite d'alimentation (3) en amont de l'élément de dosage et/ou d'arrêt (17) dans la conduite d'alimentation (3) par référence au sens d'écoulement (16, 16A) du liquide à refouler.

4. Corps de buse selon l'une au moins des revendications précédentes, **caractérisé en ce que** l'au moins un élément de filtration et/ou de tamisage (15) est disposé dans la conduite d'alimentation (3) en étant situé au moins partiellement dans le flux de liquide (16, 16A) s'écoulant à travers la conduite d'alimentation (3).

5. Corps de buse selon l'une au moins des revendications précédentes, **caractérisé en ce que** la conduite de refoulement (18) dérive de la conduite d'alimentation (3) dans la zone supérieure (22) de la conduite d'alimentation (3).

6. Corps de buse selon l'une au moins des revendications précédentes, **caractérisé en ce que** la conduite de refoulement (18) dérive de la conduite d'alimentation (3) dans la zone supérieure (22) de la conduite d'alimentation (3) en étant initialement dirigée vers le haut.

7. Corps de buse selon l'une au moins des revendications précédentes, **caractérisé en ce que** la conduite d'évacuation (18) est en forme de U depuis la dérivation de la conduite d'alimentation (3) jusqu'à l'élément de dosage et/ou d'arrêt (17) en passant par la conduite de refoulement (18).

8. Corps de buse selon l'une au moins des revendications précédentes, **caractérisé en ce que** l'élément de dosage et/ou d'arrêt (17) est disposé en amont de la buse (8) dans une zone (18B), s'étendant au moins à peu près perpendiculairement, de la conduite de refoulement (18).
